# EUROPÄISCHE PATENTSCHRIFT

(11) **EP 3 578 412 B1**
(45) Veröffentlichungstag und Bekanntmachung des Hinweises auf die Patenterteilung: **08.07.2026**
(21) Anmeldenummer: 19163169.6
(22) Anmeldetag: 15.03.2019
(51) Int. Cl.: B60L 53/63, H02J 3/14

(54) **LOAD-MANAGER FÜR DEZENTRALE LADEPUNKTE**
LOAD MANAGER FOR REMOTE LOADING POINTS
GESTIONNAIRE DE CHARGE POUR POINTS DE CHARGE DÉCENTRALISÉS

(30) Priorität: 08.06.2018 DE 102018113689
(43) Veröffentlichungstag der Anmeldung: 11.12.2019
(73) Patentinhaber: Mitteldeutsche Netzgesellschaft Strom mbH, 06184 Kabelsketal (DE)
(72) Erfinder: NOSKE, Tino, 09117 Chemnitz (DE); KALIS, Oliver, 09127 Chemnitz (DE)
(74) Vertreter: Cohausz & Florack

(56) Entgegenhaltungen:
- WO-A1-2014/110708
- WO-A2-2011/008505
- US-A1- 2010 026 096
- US-A1- 2010 134 067
- US-A1- 2012 253 567
- US-A1- 2017 246 961

## Beschreibung

### Gebiet

Beispielhafte Ausführungsformen der Erfindung betreffen dezentrale Ladepunkte insbesondere für Elektrofahrzeuge, beispielsweise das Steuern und/oder Regeln derartiger dezentraler Ladepunkte.

### Hintergrund

Zahlreiche dezentrale Ladepunkte insbesondere für Elektrofahrzeuge sind heute bereits an einem Niederspannungsnetz (auch als Niederspannungsverteilnetz bezeichnet) angeschlossen. Dies ermöglicht es unter anderem den Besitzern von Elektrofahrzeugen, das Elektrofahrzeug bequem z. B. in einer Garage oder am privaten Stellplatz über Nacht aufzuladen. Dies stellt das Niederspannungsnetz ab einer gewissen Anzahl von dezentralen Ladepunkten mitunter vor Herausforderungen, da insbesondere ein gleichzeitiges Aufladen von vielen solcher Elektrofahrzeuge das Niederspannungsnetz an seine Kapazitätsgrenze bringen kann. Ab einer bestimmten Leistungsgrenze löst dann z. B. ein vorgelagertes Leitungsschutzelement (z. B. Sicherung) aus. Dies kann beispielsweise bei dem Laden von Elektrofahrzeugen verstärkt auftreten, da z. B. am Abend und/oder über Nacht viele Besitzer oder Benutzer von derartigen Elektrofahrzeugen dieses für den Einsatz am nächsten Tag aufladen möchten.

Deshalb ist insbesondere eine vereinfachte intelligente Steuerung und/oder Regelung von dezentralen Ladepunkten der zentrale Schlüssel für die Integration der Elektromobilität in das Niederspannungsnetz.

Die WO 2014/110708 A1 offenbart eine koordinierte Steuerungsmethode für ein Verteilungsnetz mit DER (Distributed Energy Resource) und EV (Electric Vehicle) und ein koordiniertes Steuerungssystem davon. Das Verfahren erfasst Informationen von mindestens einer DER-Steuerung, mindestens einer EV-Steuerung und/oder mindestens einer Laststeuerung; Berechnen von P/Q-Referenzen und/oder Leistungsschalter-Steuerbefehlen für die DER, die EV und die Last auf der Grundlage von Wirk-/Blindleistungsbilanz, Spannungs- und/oder Frequenzanforderungen; Lokalisieren der Referenzen und/oder der Steuerbefehle an die DER, die EV und die Last auf der Grundlage ihrer Standorte und verfügbaren Kapazität; und Ausgeben der zugewiesenen Referenzen und/oder Steuerbefehle an die DER, die EV und die Last. Die Lösungen der vorliegenden Erfindung minimieren negative Auswirkungen von DER und EVs und halten eine steuerbare Spannungs- und Frequenzstabilisierung aufrecht.

Die US 2012/0253567 A1 offenbart ein Verfahren und einen Prozess, der die Erfassung und effiziente HF-Übertragung von Daten ermöglicht, die es den Kunden des Versorgungsunternehmens, den Versorgungsunternehmen und/oder anderen kontrollierenden Einheiten ermöglicht, den Zeitpunkt und die Geschwindigkeit des Aufladens der Batterie von Elektrofahrzeugen so zu regulieren, dass spitzenlastbedingte Transformatorausfälle vermieden werden.

Die US 2017/0246961 A1 offenbart adaptive Ladungsnetze, die die Optimierung der elektrischen Auslegung von Ladungsnetzen für Elektrofahrzeuge ermöglichen. Eine Ausführungsform umfasst eine elektrische Versorgung; eine Vielzahl von adaptiven Ladestationen; wobei mindestens eine adaptive Ladestation Leistung an mindestens eine andere adaptive Ladestation verteilt; wobei mindestens eine adaptive Ladestation so konfiguriert ist, dass sie Kapazitätsinformationen an eine Steuerung übermittelt; und wobei die Steuerung so konfiguriert ist, dass sie die Verteilung von Leistung an die Vielzahl von adaptiven Ladestationen auf der Grundlage der von mindestens einer adaptiven Ladestation empfangenen Kapazitätsinformationen steuert.

### Zusammenfassung einiger beispielhafter Ausführungsformen der Erfindung

Es wäre wünschenswert, eine sichere Lösung insbesondere für Netzbetreiber bereitstellen zu können, die eine vereinfachte intelligente Steuerung und/oder Regelung von dezentralen Ladepunkten im Niederspannungsnetz ermöglicht. Gemäß einem ersten beispielhaften Aspekt der Erfindung wird ein Verfahren offenbart, das folgendes umfasst:
- Erfassen von einer Strominformation indikativ für:
   i) einen maximal zulässigen Abgangsstrom;
   ii) eine Anzahl von einem oder mehreren dezentralen Ladepunkten; und
   iii) einen Zeitperioden-Strommittelwert;
   wobei das Erfassen der Strominformation an einem Netzabgang eines Niederspannungsnetzes erfolgt und wobei der eine oder die mehreren dezentralen Ladepunkte von dem Niederspannungsnetzabgang versorgt werden;
- Bestimmen einer Leistungsinformation indikativ für eine maximal mögliche Ladeleistung, die von den mehreren dezentralen Ladepunkten beziehbar ist;
- Bestimmen von einem oder mehreren Steuersignalen indikativ für eine Steuerung und/oder Regelung der mehreren dezentralen Ladepunkte, wobei das eine oder die mehreren Steuersignale zumindest teilweise basierend auf der Strominformation und/oder der Leistungsinformation bestimmt werden; und
- Ausgeben oder Veranlassen des Ausgebens des einen oder der mehreren Steuersignale, wobei die mehreren dezentralen Ladepunkte untereinander kommunizieren, wobei das Ausgeben oder das Veranlassen des Ausgebens der Steuersignale mittels einer Übertragung des einen oder der mehreren Steuersignale über eine Kommunikationsverbindung zu zumindest einem der mehreren Ladepunkte erfolgt, und wobei die Kommunikationsverbindung eine Powerline-Kommunikationsverbindung ist;
- Detektieren von mehreren dezentralen Ladepunkten im Rahmen einer Broadcast-Discovery-Funktion, wobei sämtliche von dem Niederspannungsnetz umfasste dezentrale Ladepunkte ermittelt werden; und
- Speichern der mehreren detektierten dezentralen Ladepunkte;
- wobei das eine oder die mehreren Steuersignale für die mehreren dezentralen Ladepunkte eine Leistungsstufe repräsentieren, wobei die Leistungsstufe indikativ für eine maximale Ladeleistung je dezentralem Ladepunkt ist.

Dieses Verfahren wird beispielsweise von einer Vorrichtung durchgeführt und/oder gesteuert, z. B. von einem Load-Manager. Ein derartiger Load-Manager umfasst beispielsweise Mittel zum Erfassen von der Strominformation, Mittel zum Bestimmen der Leistungsinformation, Mittel zum Bestimmen des einen oder der mehreren Steuersignale, und Mittel zum Ausgeben und/oder Empfangen bzw. zum Veranlassen des Ausgebens des einen oder der mehreren bestimmten Steuersignale, z. B. eine Kommunikationsschnittstelle, so dass das eine oder die mehreren bestimmten Steuersignale von einem oder mehreren dezentralen Ladepunkte empfangen oder an einen oder mehrere dezentrale Ladepunkte übermittelt werden können.

Gemäß einem zweiten Aspekt der Erfindung wird eine Vorrichtung beschrieben, welche dazu eingerichtet ist oder entsprechende Mittel umfasst, ein Verfahren nach dem ersten Aspekt durchzuführen und/oder zu steuern. Vorrichtungen des Verfahrens gemäß dem ersten Aspekt sind oder umfassen insbesondere eine oder mehrere Vorrichtungen gemäß dem zweiten Aspekt.

Gemäß dem zweiten Aspekt der Erfindung wird auch eine alternative Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Arbeitsspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle und/oder Kommunikationsschnittstelle. Zum Beispiel sind beispielhafte erfindungsgemäße Vorrichtungen über ein oder mehrere Netzwerke (Kommunikationsnetze) miteinander verbunden und/oder verbindbar.

Eine beispielhafte Vorrichtung gemäß dem zweiten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem zweiten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Einzelne Verfahrensschritte des Verfahrens gemäß dem ersten Aspekt (beispielsweise das Erfassen der Strominformation) können hierbei mit einer Sensorvorrichtung bzw. Sensorik, welche auch mindestens ein Sensorelement bzw. Sensor(en) (z. B. Strom- und/oder Spannungsmesseinrichtung) aufweist, durchgeführt werden. Ebenso können einzelne Verfahrensschritte (beispielsweise das Bestimmen der Leistungsinformation), welche beispielswiese nicht mit der Sensoreinrichtung durchgeführt werden müssen, von einer weiteren Vorrichtung vorgenommen werden, welche insbesondere über ein Kommunikationssystem bzw. eine Kommunikationsschnittstelle mit der Vorrichtung, welche mindestens ein Sensorelement bzw. Sensor(en) aufweist, in Verbindung steht.

Weitere Vorrichtungen können vorgesehen sein, beispielswiese ein Server und/oder beispielsweise ein Teil bzw. eine Komponente einer sogenannten Computer Cloud, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Gemäß dem zweiten Aspekt der Erfindung wird auch ein Computerprogramm beschrieben, das Programmanweisungen umfasst, die einen Prozessor zur Ausführung und/oder Steuerung eines Verfahrens gemäß dem ersten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Gemäß dem zweiten Aspekt der Erfindung wird auch ein computerlesbares Speichermedium beschrieben, welches ein Computerprogramm gemäß dem zweiten Aspekt enthält. Ein computerlesbares Speichermedium kann z.B. als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Gemäß einem dritten Aspekt der Erfindung wird auch ein System beschrieben, umfassend eine oder mehrere Vorrichtungen, welche zusammen ein Verfahren gemäß dem ersten Aspekt durchführen.

Im Folgenden werden beispielhafte Merkmale und beispielhafte Ausgestaltungen nach allen Aspekten detaillierter beschrieben:
Unter einem Niederspannungsnetz bzw. Niederspannungsverteilnetz im Sinne der Erfindung wird insbesondere ein elektrisches Stromnetz bzw. zumindest ein Teil eines elektrischen Stromnetzes der sogenannten Niederspannungsebene verstanden.

Hierbei handelt es sich beispielsweise um Stromnetze, die mit einer Netzspannung von etwa 230 V (z. B. zwei-Phasen-Stromnetz) bis etwa 400 V (z. B. drei-Phasen-Stromnetz) oder mehr betreibbar sind. In der Regel werden mit einem derartigen Niederspannungsnetz elektrische Verbraucher von Endverbrauchern versorgt. Da derartige Niederspannungsnetze häufig die letzte Ebene bis zum Hausanschluss eines Verbrauchers darstellen, werden derartige Niederspannungsnetze oftmals z. B. auch zum Laden von Elektrofahrzeugen, z. B. am Hausanschluss eines Verbrauchers, eingesetzt.

Unter einem Netzabgang im Sinne der Erfindung wird insbesondere ein Verbindungspunkt oder ein Element des Niederspannungsnetzes verstanden, über den elektrischer Strom von einem übergeordneten Stromnetz (z. B. ein übergeordnetes Verteilnetz, dass mit einer höheren Netzspannung betreibbar ist, als die des Niederspannungsnetzes) in das Niederspannungsverteilnetz einspeisbar, oder über den bzw. das elektrischer Strom von dem Niederspannungsnetz in das übergeordnete Stromnetz rückspeisbar ist. Das Element kann beispielsweise ein zwischen dem Niederspannungsnetz und dem übergeordneten Stromnetz angeordneter Leitungsabschnitt, insbesondere eine von einer Netzstation abgehende Niederspannungsleitung sein.

Unter einem dezentralen Ladepunkt im Sinne der Erfindung wird insbesondere eine Ladebox verstanden, die einen Anschluss zum Verbinden mit einem von einem Elektrofahrzeug umfassten Speicher (auch als Batterie des Elektrofahrzeugs bezeichnet) herstellen kann, z. B. mittels eines Ladekabels.

Das Erfassen der Strominformation ist beispielsweise ein Messen derjenigen Parameter (z. B. Messwerte) i) bis iii), für die die Strominformation indikativ ist. Das Erfassen (z. B. Messen) der Strominformation erfolgt an dem Netzabgang des Niederspannungsnetzes, an dem Mittel zum Erfassen angeordnet oder zusätzlich oder alternativ mit diesem operativ (z. B. elektrisch) verbindbar sind.

Alternativ oder zusätzlich kann die Strominformation beispielsweise erhalten werden. Z. B. wird die Strominformation an dem Netzabgang von einer ersten Vorrichtung erfasst (z. B. gemessen), und anschließend an eine zweite Vorrichtung übermittelt, die dann beispielsweise einen oder mehreren der Verfahrensschritte des vorliegenden Gegenstands nach dem Erhalten der Strominformation ausführt und/oder steuert. Der maximal zulässige Abgangsstrom (Parameter i) der Strominformation) ist indikativ für einen Schwellwert einer Stromstärke, die über den Netzabgang von einem übergeordneten Stromnetz in das Niederspannungsverteilnetz einspeisbar ist. Für den Fall, dass sowohl elektrischer Strom von dem übergeordneten Stromnetz in das Niederspannungsnetz eingespeist wird, und auch elektrischer Strom bzw. Leistung von dem Niederspannungsnetz in das übergeordnete Stromnetz rückgespeist wird, ist das Erfassen des Abgangsstroms beispielsweise richtungsabhängig vorzunehmen.

Die Anzahl von dezentralen Ladepunkten (Parameter ii) der Strominformation) ist indikativ für eine Anzahl von dezentralen Ladepunkten zum Laden von beispielsweise Elektrofahrzeugen, wobei diese dezentralen Ladepunkte über den Netzabgang die zum Laden notwendige Energie beziehen können. Regelmäßig bezieht mindestens ein dezentraler Ladepunkt des Niederspannungsnetzes (z. B. mehr als ein dezentraler Ladepunkt) über den Netzabgang elektrischen Strom von dem übergeordneten Stromnetz.

Der Zeitperioden-Strommittelwert (Parameter iii) der Strominformation) ist beispielsweise ein gerichteter Zeitperioden-Strommittelwert. Der (z. B. gerichtete) Zeitperioden-Strommittelwert ist beispielsweise indikativ für einen Mittelwert einer über den Netzabgang bezogenen elektrischen Leistung, die sich aus der Division der über die Periode von einer vorbestimmten Zeit (z. B. 1 min, 2, min, 3 min, 5 min, 10, min, 15 min, 30 min, 45 min, 60 min, um nur einige nicht-limitierende Beispiele zu nennen) bezogenen elektrischen Leistung durch die Dauer der Periode (z. B. 15 min.) ergibt. Insbesondere ist der Zeitperioden-Strommittelwert ein 15-min-Strommittelwert als Parameter iii) der Strominformation.

Beispielsweise können in einer Netzstation zum Erfassen der (gerichteten) Strominformation Effektivwerte von Phasenströmen des betreffenden Niederspannungsnetzabgangs gemessen und ferner optional individuell überwacht und intelligent gesteuert und/oder geregelt werden. Je nach Netzauslastung im Niederspannungsnetz werden beispielsweise entsprechende Steuersignale an den einen oder die mehreren dezentralen Ladepunkte zur Vermeidung von Netzengpässen übermittelt (z. B. in Anlehnung an das BDEW (Bundesverband der Energie- und Wasserwirtschaft)-Ampelmodell).

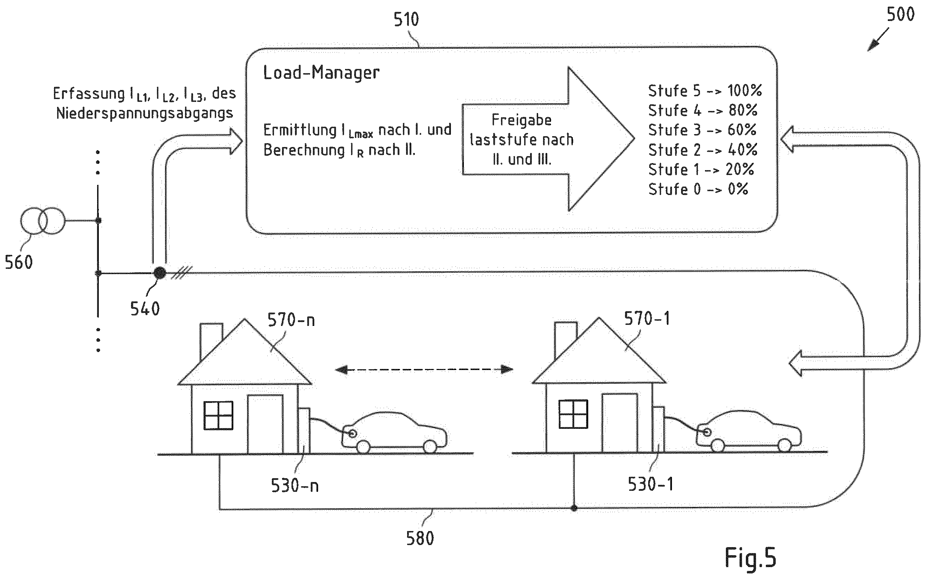

Zumindest teilweise basierend auf diesen Parametern i) bis iii) der Strominformation erfolgt das Bestimmen der Leistungsinformation, die dann beispielsweise eine Leistung repräsentiert, die von jedem einzelnen der dezentralen Ladepunkte zum Laden eines jeweiligen Elektrofahrzeugs bezogen werden kann bzw. bezogen wird. Alternativ oder zusätzlich, kann die Leistungsinformation auch eine Gesamtleistung repräsentieren, die von allen dezentralen Ladepunkten, die über den Netzabgang elektrischen Strom beziehen (können), bezogen werden kann bzw. bezogen wird. Basierend auf der Gesamtleistung kann durch eine Division durch die Anzahl der dezentralen Ladepunkte ebenfalls die Leistung bestimmt werden, die von jedem einzelnen der dezentralen Ladepunkte zum Laden eines jeweiligen Elektrofahrzeugs bezogen werden kann bzw. bezogen wird. Die Leistungsinformation repräsentiert beispielsweise eine Leistungsstufe, z. B. eine der Leistungsstufen 0 bis 5, die im Zusammenhang mit der Fig. 5 in dem Abschnitt "Detaillierte Beschreibung einiger beispielhafter Ausführungsformen der Erfindung" dieser Beschreibung noch näher erläutert werden.

Das eine oder die mehreren bestimmten Steuersignale zur Steuerung und/oder Regelung des einen oder der mehreren dezentralen Ladepunkte können dann beispielsweise den bzw. die jeweiligen dezentralen Ladepunkte dazu veranlassen, die gemäß der Leistungsinformation bestimmte zulässige Leistung zum Laden eines Elektrofahrzeugs zu beziehen bzw. nicht zu überschreiten. Derart kann sichergestellt werden, dass der eine oder die mehreren (z. B. alle) dezentralen Ladepunkte einen gleichen Leistungsanteil elektrischer Energie, z. B. zum Laden eines mit dem jeweiligen dezentralen Ladepunktes verbundenen Elektrofahrzeugs aufwenden können.

Als Eingangsgröße für die Steuerung und/oder Regelung wird beispielsweise nur der maximal zulässige Abgangsstrom, die Anzahl der dezentralen Ladepunkte und der (z. B. je nach Bedarf gerichtete) Zeitperioden-Strommittelwert (z. B. der 15-Min-Strommittelwert) des betreffenden Netzabgangs (vorzugsweise für alle drei Phasen) benötigt.

Die Ausgabe bzw. das Veranlassen der Ausgabe kann beispielsweise direkt von der Vorrichtung, die das eine oder die mehreren Steuersignale bestimmt hat, an die jeweiligen dezentralen Ladepunkte erfolgen. Alternativ kann die Ausgabe bzw. das Veranlassen der Ausgabe an eine andere Entität erfolgen, die anschließend das eine oder die mehreren Steuersignale an die jeweiligen dezentralen Ladepunkte weiterleitet (z. B. übermittelt), z. B. über ein Kommunikationsnetz.

Derart wird ermöglicht, dass die Übertragungsfähigkeit eines Niederspannungsverteilnetzes optimal genutzt wird. Es ist eine robuste, intelligente Steuerung und/oder Regelung von dezentralen Ladepunkten zur Vermeidung von Netzüberlastungen (insbesondere im Niederspannungsverteilnetz) und/oder Stromausfällen im Niederspannungsverteilnetz möglich. Ein konventioneller Netzausbau kann hierdurch fast vollständig vermieden werden.

Das eine oder die mehreren Steuersignale berechnet z. B. der Load-Manager aus diesen Parametern i) bis iii) der Strominformation anteilig die maximal mögliche Leistung für jeden der dezentralen Ladepunkte des Niederspannungsabganges bzw. des betreffenden Niederspannungsverteilnetzes. Dies wird von der Leistungsinformation repräsentiert.

Gemäß einer beispielhaften Ausführungsform aller Aspekte werden das eine oder die mehreren Steuersignale ferner basierend auf einer Abgangsauslastungsinformation bestimmt, wobei die Abgangsauslastungsinformation indikativ für eine Abgangsauslastung des Netzabgangs in Bezug auf eine maximal mögliche Abgangsauslastung ist.

Die Abgangsauslastungsinformation wird beispielsweise einmalig parametriert, z. B. mittels eines Speicherns in einem Speicher, der z. B. von der Vorrichtung gemäß dem zweiten Aspekt umfasst ist oder mit der Vorrichtung nach dem zweiten Aspekt verbindbar ist. Hierbei kann es sich beispielsweise um eine Datenbank handeln. Die Parametrierung kann beispielsweise aus der Ferne erfolgen, z. B. seitens einer Netzleitstelle des übergeordneten Stromnetzes. Dies ermöglicht es beispielsweise, dass die Stabilität des übergeordneten Stromnetzes nicht gefährdet wird, so dass insbesondere die Nennfrequenz konstant gehalten werden kann.

Die Abgangsauslastungsinformation repräsentiert beispielsweise eine Begrenzung der maximal möglichen Leistung für jeden der dezentralen Ladepunkte. Diese Begrenzung ist beispielsweise durch die Infrastruktur des Niederspannungsnetzes gegeben. In einem gewöhnlichen Niederspannungsverteilnetz beträgt die Begrenzung der maximal möglichen Leistung für jeden der dezentralen Ladepunkte z. B. etwa 250 A, die mittels einer Sicherung, die z. B. in etwa deckungsgleich mit einem Nennstrom eines Kabels ist, abgesichert werden kann.

Gemäß einer beispielhaften Ausführungsform aller Aspekte ist ferner umfasst:
- Überwachen des Netzabgangs in vordefinierten oder nach vordefinierten Regeln bestimmten Zeitintervallen, wobei das Überwachen zumindest ein weiteres Erfassen von der Strominformation umfasst; und
- Adaptieren des einen oder der mehreren Steuersignale zumindest teilweise basierend auf der weiteren erfassten Strominformation, wobei das eine oder die mehreren adaptierten Steuersignale ausgegeben werden bzw. deren Ausgabe veranlasst wird.

Das Ausgeben bzw. das Veranlassen des Ausgebens wird beispielsweise über eine IKT (Informations- und Kommunikationstechnologie) ermöglicht. Entsprechend kann beispielsweise eine stetige Überwachung und bei Bedarf Anpassung der Steuersignale erfolgen, die anschließend an die jeweiligen dezentralen Ladepunkte ausgegeben werden können.

Beispielsweise kann das Überwachen des Netzabgangs derart erfolgen, dass z. B. jede Minute, alle 5 Minuten, oder alle 15 Minuten, um nur einige nicht-limitierende Beispiele zu nennen, das Verfahren nach dem ersten Aspekt neu initiiert wird, so dass dieses entsprechend ausgeführt und/oder gesteuert wird. Folglich erfolgt beispielsweise in diesen stetigen Zeitabständen das Erfassen einer Strominformation, das Bestimmen einer Leistungsinformation, das Bestimmen von einem oder mehreren Steuersignalen und das entsprechende Ausgeben bzw. Veranlassen des Ausgebens des einen oder der mehreren Steuersignale.

Gemäß einer beispielhaften Ausführungsform aller Aspekte erfolgt das Bestimmen des einen oder der mehreren Steuersignale unabhängig von (einer) Ladeleistung(en) des einen oder der mehreren dezentralen Ladepunkte.

Die Ladeleistung(en) des einen oder der mehreren dezentralen Ladepunkte im Sinne des Gegenstands ist hierbei insbesondere die momentane bzw. tatsächliche Ladeleistung des einen oder der mehreren dezentralen Ladepunkte.

Die Erfassung der tatsächlichen bzw. momentanen Ladeleistungen an den jeweiligen dezentralen Ladepunkten ist entsprechend erfindungsgemäß nur optional erforderlich. Dies erlaubt eine wesentlich vereinfachte Implementierung in bestehende Niederspannungs(verteil)netze.

Gemäß einer beispielhaften Ausführungsform aller Aspekte werden an dem einen oder den mehreren dezentralen Ladepunkten jeweils operativ verbundene Lasten gemeinsam mittels einer Leistungsmodulation gespeist.

Die an dem einen oder den mehreren dezentralen Ladepunkten jeweils operativ verbundenen Lasten sind beispielsweise Elektrofahrzeuge, die zum Laden an dem jeweiligen dezentralen Ladepunkt operativ (z. B. elektrisch) verbunden werden.

Die Leistungsmodulation ermöglicht es, z. B. diskriminierungsfrei und robust sämtliche dezentralen Ladepunkte des Netzabgangs bzw. des Niederspannungsnetzes mit elektrischer Energie zu versorgen, da alle dezentralen Ladepunkte mit identischer Leistung, z. B. zum Laden von mit dem jeweiligen Ladepunkt operativ (z. B. elektrisch) verbundenen Elektrofahrzeugen, versorgt bzw. gespeist werden können.

Die Leistungsmodulation ist beispielsweise eine Funktion P(t) in Abhängigkeit einer residualen Netzlast (z. B. eine in dem Niederspannungsnetz nachgefragte elektrische Leistung, die optional unter Berücksichtigung von in dem Niederspannungsnetz z. B. durch Windenergieanlagen, Photovoltaikanlagen, oder dergleichen erzeugte elektrische Leistung bestimmbar ist). Diese Leistungsmodulation unterstützt für alle vom Niederspannungsnetz versorgten Ladepunkte einen robusten und diskriminierungsfreien Netzbetrieb.

Gemäß einer beispielhaften Ausführungsform aller Aspekte kommunizieren die mehreren dezentralen Ladepunkte untereinander oder jeweils einzeln mit der Vorrichtung (z. B. Load-Manager).

Jeder der dezentralen Ladepunkte kann beispielsweise eine dedizierte Kommunikationsverbindung zu der Vorrichtung nach dem zweiten Aspekt aufweisen.

Alternativ oder zusätzlich kann nach der Art eines Bussystems eine (z. B. bidirektionale) Kommunikationsverbindung von einem der dezentralen Ladepunkte zu der Vorrichtung nach dem zweiten Aspekt bestehen, so dass beispielsweise ein Steuersignal über einen oder mehrere weitere der dezentralen Ladepunkte an oder von den entsprechenden dezentralen Ladepunkten oder der Vorrichtung weitergeleitet wird.

Ferner kann über eine derartige Kommunikationsverbindung zu der Vorrichtung nach dem zweiten Aspekt die Anzahl der dezentralen Ladepunkte bestimmt werden, indem sich z. B. die jeweiligen dezentralen Ladepunkte an der Vorrichtung nach dem zweiten Aspekt (z. B. Load-Manager) anmelden können. Erfindungsgemäß wird seitens der Vorrichtung nach dem zweiten Aspekt eine sogenannte Broadcast-Discovery-Funktion ausgeführt und/oder gesteuert, mittels der ein Ermitteln von sämtlichen dezentralen Ladepunkten, die mit der Vorrichtung nach dem zweiten Aspekt steuer- und/oder regelbar sind (und z. B. über den Netzabgang versorgt werden), möglich ist.

Gemäß einer erfindungsgemäßen Ausführungsform aller Aspekte repräsentiert das eine oder die mehreren Steuersignale für den einen oder die mehreren dezentralen Ladepunkte eine Leistungsstufe, wobei die Leistungsstufe indikativ für eine maximale Ladeleistung je dezentralem Ladepunkt ist.

Beispielsweise kann die eine bzw. es können die mehreren Steuersignale derart bestimmt werden, dass ein Stromwert im Niederspannungsabgang beobachtet (z. B. gemessen) wird. Anschließend kann das Bestimmen ferner basierend auf einer kritischen Markung erfolgen, so dass das eine oder die mehreren Steuersignale z. B. in gewissen Stufen einen oder mehrere der dezentralen Ladepunkte nach Bedarf abregeln (z. B. diskriminierungsfrei). Dies gewährleistet insbesondere die Stabilität des übergeordneten Stromnetzes. Die kritische Markung kann beispielsweise im Rahmen der Parametrierung der Vorrichtung nach dem zweiten Aspekt der Erfindung vordefiniert werden.

Gemäß einer beispielhaften Ausführungsform aller Aspekte erfolgt das Ausgeben oder das Veranlassen des Ausgebens der Steuersignale mittels einer Übertragung des einen oder der mehreren Steuersignale über eine Kommunikationsverbindung zu zumindest einem der einen oder mehreren dezentralen Ladepunkte.

Die Kommunikationsverbindung ist beispielsweise eine sichere Kommunikationsverbindung, so dass insbesondere keine Manipulation von dem einen oder den mehreren Steuersignalen, z. B. durch unberechtigte Dritte erfolgen kann.

Die Ausgabe der Steuersignale ist erfindungsgemäß eine Übertragung der Steuersignale an die dezentralen Ladepunkte, über eine Powerline PLC (Powerline Communication Bus) bzw. PLCBUS Kommunikationsverbindung. Für den Fall, dass mehr als eine Kommunikationsverbindung zwischen der Vorrichtung nach dem zweiten Aspekt und zumindest einer der einen oder mehreren dezentralen Ladepunkte besteht, ist eine Redundanz z. B. für einen mitunter auftretenden Störfall der Kommunikationsverbindung gegeben.

Die Signalübertragung der Steuersignale ist dabei drahtgebunden (z. B. über Powerline "PLC" oder ein modernes Messsystem)**.** Eine Kommunikation über eine Powerline-Kommunikationsverbindung (z. B. eine PLC oder PLCBUS-Verbindung) ermöglicht eine autonome dezentrale Lösung, da eine Ausfallsicherheit gewährleistet werden kann durch das Nutzen der elektrischen Leitung zum Übertragen der Steuersignale neben dem Übertragen von elektrischem Strom.

Gemäß einer beispielhaften Ausführungsform aller Aspekte ist die Kommunikationsverbindung unidirektional oder bidirektional.

Für den Fall, dass die Kommunikationsverbindung unidirektional ist, können lediglich Steuersignale an die jeweiligen dezentralen Ladepunkte übermittelt werden, nicht jedoch von den jeweiligen Ladepunkten an die Vorrichtung nach dem zweiten Aspekt. Dies ist im Falle einer bidirektionalen Kommunikationsverbindung jedoch ermöglicht, und erlaubt es, beispielsweise Fehlermeldungen, Ausfälle, eine aktuelle Bezugsleistung, Informationen zum Ladevorgang (den Ladeplan), oder eine Kombination hiervon der jeweiligen dezentralen Ladepunkte seitens der Vorrichtung nach dem zweiten Aspekt für die weitere Verarbeitung zu erfassen, und beispielsweise auch an eine Netzleitstelle des übergeordneten Stromnetzes zu übermitteln. Die Netzleitstelle kann dann beispielsweise diese Informationen zur Stabilitätssicherung berücksichtigen.

Gemäß einer beispielhaften Ausführungsform aller Aspekte kann über eine weitere Kommunikationsverbindung zu einer Netzleitstelle eines dem Niederspannungsnetz übergeordneten Stromnetzes (z. B. zur Übertragung von Informationen (z. B. Strominformation, Leistungsinformation, Steuersignale, oder eine Kombination hiervon, um nur einige nicht-limitierende Beispiele zu nennen) eine Kommunikation erfolgen.

Die Kommunikation kann beispielsweise zumindest unidirektional, insbesondere bidirektional von der Vorrichtung nach dem zweiten Aspekt (z. B. Load-Manager) an die (zentrale) Netzleitstelle des übergeordneten Stromnetzes erfolgen.

Dies erlaubt es, beispielsweise Fehlermeldungen, Ausfälle oder dergleichen der jeweiligen dezentralen Ladepunkte seitens der Vorrichtung nach dem zweiten Aspekt zu erfassen, und anschließend beispielsweise an die Netzleitstelle des übergeordneten Stromnetzes zu übermitteln. Die Netzleitstelle kann dann beispielsweise diese Informationen zur Stabilitätssicherung berücksichtigen.

Die Kommunikationsverbindung zwischen der Vorrichtung nach dem zweiten Aspekt und der Netzleitstelle ist beispielsweise über eine LWL (Lichtwellenleiter)-Verbindung realisiert.

Für den Fall, dass keine Kommunikationsverbindung zwischen der Vorrichtung (z. B. Load-Manager) nach dem zweiten Aspekt und der Netzleitstelle besteht, kann die Vorrichtung auch autark arbeiten. Die Kommunikationsverbindung zwischen Netzleitstelle und der Vorrichtung ist entsprechend keine zwingende Vorgabe. Gemäß einer beispielhaften Ausführungsform aller Aspekte ist ferner umfasst:
- Detektieren von einem oder mehreren dezentralen Ladepunkten, wobei sämtliche von dem Niederspannungsnetz umfasste dezentrale Ladepunkte ermittelt werden können; und
- Speichern des einen oder der mehreren detektierten dezentralen Ladepunkte.

Das Speichern des einen oder der mehreren detektierten dezentralen Ladepunkte kann beispielsweise in einer Look-Up Tabelle erfolgen. Die Tabelle kann beispielsweise in einem Speicher, der von der Vorrichtung nach dem zweiten Aspekt umfasst oder mit dieser verbindbar ist, gespeichert sein.

Das Detektieren von einem oder mehreren dezentralen Ladepunkten ist erfindungsgemäß mittels der bereits vorstehend beschriebenen Broadcast-Discovery-Funktion realisiert, so dass ein Ermitteln von sämtlichen dezentralen Ladepunkten, die mit der Vorrichtung nach dem zweiten Aspekt steuer- und/oder regelbar sind und über den Netzabgang versorgt werden, möglich ist. Die Broadcast-Discovery-Funktion veranlasst beispielsweise sämtliche dezentralen Ladepunkte des Niederspannungsverteilnetzes dazu, der Vorrichtung nach dem zweiten Aspekt zu signalisieren, dass ein von der Vorrichtung nach dem zweiten Aspekt gesendetes Broadcast-Discovery-Signal empfangen wurde. Dann kann beispielsweise ein (erneutes) Bestimmen des einen oder der mehreren Steuersignale erfolgen, z. B. basierend auf einer vordefinierten Kennlinie, die in Abhängigkeit der Anzahl von dezentralen Ladepunkte eine Steuerung und/oder Regelung ermöglicht.

Entsprechend kann in der Tabelle gespeichert sein, wie viele dezentrale Ladepunkte von dem Netzabgang bzw. dem Niederspannungsnetz umfasst sind. Um eine dynamische Anpassung zu ermöglichen, können die Schritte des Detektierens und des Speichers beispielsweise in vordefinierten oder nach vordefinierten Regeln bestimmten Zeitintervallen, die z. B. identisch zu denen des Schrittes der Überwachung sind, erfolgen.

Entsprechend eines Netzschaltzustands, der z. B. durch die Anzahl der dezentralen Ladepunkte definiert sein kann, kann beispielsweise eine Anpassung der Parametrierung erfolgen. Z. B. kann ein Sonderschaltzustand vorliegen, indem beispielsweise eine Ortsnetzstation auf weitere umgeschaltet ist, so dass in diesem Fall nicht nur die dezentralen Ladepunkte des einen Niederspannungsnetzes erfasst werden, sondern auch die von einem oder mehreren weiteren Niederspannungsnetzen, die z. B. über eine oder mehrere benachbarte Ortsnetzstationen angebunden sind.

In der Look-Up Tabelle können ferner Informationen über die jeweiligen dezentralen Ladepunkte (z. B. Ladebox) gespeichert sein, z. B. welcher Ladepunkt der einen oder mehreren dezentralen Ladepunkte welchen Strombedarf (z. B. in A) hat.

Alternativ oder zusätzlich kann auf Basis der Informationen in der Look-Up Tabelle der Leistungsbedarf von allen dezentralen Ladepunkten bestimmt werden.

Gemäß einer beispielhaften Ausführungsform aller Aspekte werden das eine oder die mehreren Steuersignale ferner basierend auf in einer Datenbank hinterlegten Informationen bestimmt, wobei die in der Datenbank hinterlegten Informationen zumindest die Strominformation repräsentieren.

Die Datenbank umfasst beispielsweise die Look-Up Tabelle. In der Tabelle sind beispielsweise ferner die Strominformation indikativ für die Parameter i) bis iii) hinterlegt, z. B. verknüpft mit einer Zeit- und/oder Datumsinformation, so dass beispielsweise die Historie der erfassten Strominformation bestimmt werden kann. Das Bestimmen der Leistungsinformation und/oder des einen oder der mehreren Steuersignale erfolgt beispielsweise ferner basierend auf der Historie.

Gemäß einer beispielhaften Ausführungsform aller Aspekte ist die Strominformation ferner für den folgenden Parameter iv) am Netzabgang indikativ:
iv) Zeitperioden-Strommittelwert in Abhängigkeit der Stromrichtung.

Das Erfassen des Parameters iv) der Strominformation ist insbesondere für den Fall relevant, dass auch eine Rückspeisung vom Niederspannungsnetz in das übergeordnetes Stromnetz erfolgt

Der Parameter iv) repräsentiert die Stromrichtung und die Stromstärke, also z. B. Einspeisemenge von dem übergeordneten Stromnetz in das Niederspannungsnetz und Rückspeisemenge elektrische Energie von dem Niederspannungsnetz in das übergeordnete Stromnetz. Wenn also an dem Netzabgang nicht nur ein Einspeisen, sondern auch ein Rückspeisen von elektrischem Strom erfolgt, kann dies entsprechend im Rahmen des Bestimmens des einen oder der mehreren Steuersignale berücksichtigt werden.

Es versteht sich also, dass das Bestimmen der Leistungsinformation und/oder das Bestimmen des einen oder der mehreren Steuersignale beispielsweise ferner basierend auf dem Parameter iv) der Strominformation erfolgen können.

Gemäß einer beispielhaften Ausführungsform aller Aspekte wird das Verfahren von einem Load-Manager durchgeführt, der an dem Netzabgang angeordnet oder mit diesem operativ (z. B. elektrisch) verbunden ist.

Der Load-Manager im Sinne der vorliegenden Erfindung ist insbesondere eine Vorrichtung nach dem zweiten Aspekt. Ein derartiger Load-Manager ist insbesondere eine Vorrichtung zur Steuerung und/oder Regelung von einer oder mehreren dezentralen Ladepunkten des Niederspannungsnetzes. Ein derartiger Load-Manager ist beispielsweise ein Teil ebenfalls dieses Niederspannungsnetzes oder ist zumindest mit diesem Niederspannungsnetz operativ (z. B. elektrisch) verbunden.

Der Load-Manager ist oder umfasst beispielsweise einen Controller mit einem oder mehreren Eingängen zum Erfassen von Stromwerten bzw. Messwerten, die von der Strominformation repräsentiert werden. Der Load-Manager umfasst beispielsweise eine programmierbare Steuerung, einen Mikrocontroller, ein PLC-Modul zur Kommunikation mit der einen oder den mehreren dezentralen Ladepunkten (die jeweiligen dezentralen Ladepunkte umfassen einen korrespondierenden Empfänger), eine Netzwerkschnittstelle, einen Speicher, oder eine Kombination hiervon.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

Es zeigen:
- Fig. 1: eine schematische Darstellung einer beispielhaften Ausführungsform eines Systems gemäß der vorliegenden Erfindung;
- Fig. 2: ein Flussdiagramm einer beispielhaften Ausführungsform eines Verfahrens, das im Kontext der vorliegenden Erfindung beispielsweise von dem Load-Manager 110 nach Fig. 1 ausgeführt wird;
- Fig. 3: ein Flussdiagramm einer beispielhaften Ausführungsform eines Verfahrens, das im Kontext der vorliegenden Erfindung beispielsweise ferner von dem Load-Manager 110 nach Fig. 1 ausgeführt wird;
- Fig. 4: ein Flussdiagramm einer beispielhaften Ausführungsform eines Verfahrens, das im Kontext der vorliegenden Erfindung beispielsweise ferner von dem Load-Manager 110 nach Fig. 1 ausgeführt wird;
- Fig. 5: eine schematische Darstellung eines Funktionsschemas; und
- Fig. 6: eine schematische Darstellung einer beispielhaften Ausführungsform einer Vorrichtung gemäß der vorliegenden Erfindung.

### Detaillierte Beschreibung einiger beispielhafter Ausführungsformen der Erfindung

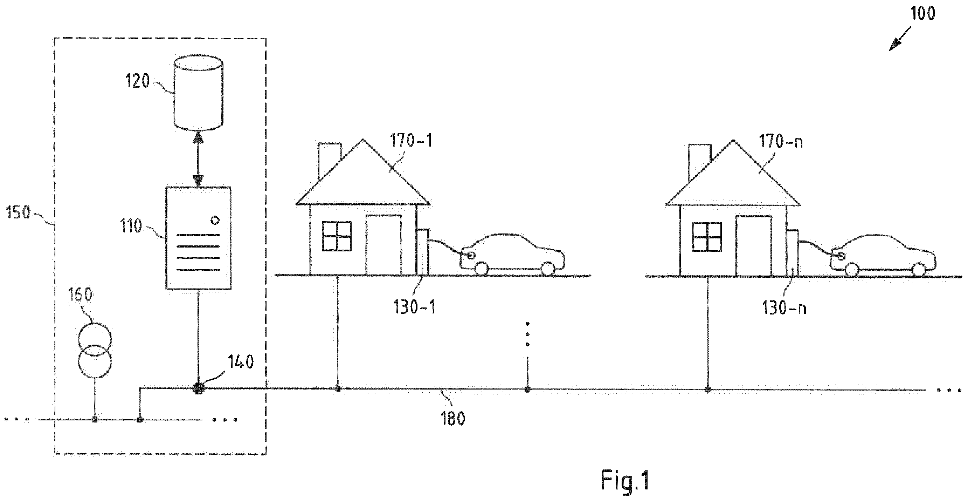

Fig. 1 ist eine schematische Darstellung einer beispielhaften Ausführungsform eines Systems 100 gemäß der vorliegenden Erfindung.

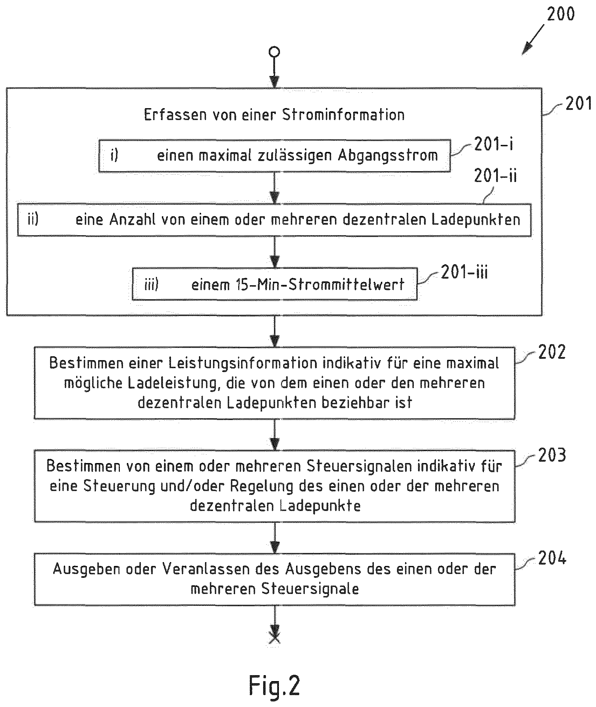

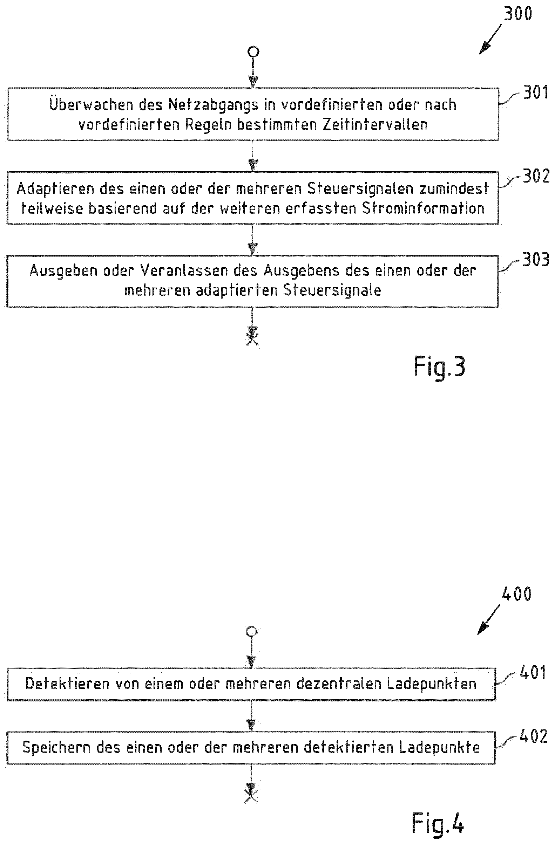

Das System 100 umfasst einen Load-Manager 110, der mit einer optionalen Datenbank 120 verbindbar ist, oder alternativ diese umfasst. Der Load-Manager 110 ist vorliegend von einer Netzstation 150 umfasst. Die Netzstation 150 stellt einen Übergang zwischen einem übergeordneten Stromnetz (in Fig. 1 nicht dargestellt), z. B. mittels des Ortsnetztransformators 160 dar. Der Load-Manager 110 ist an einem Netzabgang 140 operativ (z. B. elektrisch) verbunden, so dass ein Erfassen von der Strominformation mittels des Load-Managers 110 möglich ist. Hinter dem Netzabgang 140 sind über eine schematisch dargestellte Stichleitung 180 zwei schematische Haushalte 170-1 und 170-n angebunden. Die drei Punkte an der Verzweigung zwischen den Haushalten 170-1 und 170-n sollen darstellen, dass die Anzahl n Haushalte hinter dem Netzabgang 140 angeschlossen sein können und von dem entsprechenden Niederspannungsnetz, dass hinter dem Ortsnetztransformator 160 z. B. beginnt, umfasst sein können. Das Niederspannungsnetz ist beispielsweise durch die Elemente Netzabgang 140, Ortsnetztransformator 160, sowie Stichleitung 180 definiert. Der Load-Manager 110 ist vorliegend dazu eingerichtet und/oder konfiguriert, das Verfahren nach dem ersten Aspekt der Erfindung auszuführen und/oder zu steuern. Der Load-Manager 110 ist vorliegend dazu eingerichtet und/oder konfiguriert, das Flussdiagramm 200 der Fig. 2, und zusätzlich das Flussdiagramm 300 der Fig. 3 und/oder zusätzlich das Flussdiagramm 400 der Fig. 4 auszuführen und/oder zu steuern.

Fig. 2 stellt ein Flussdiagramm 200 einer beispielhaften Ausführungsform eines Verfahrens dar, das von einem Load-Manager 110, 510 (z. B. der Fig. 1 und/oder der Fig. 5) im Kontext der vorliegenden Erfindung ausgeführt und/oder gesteuert werden kann.

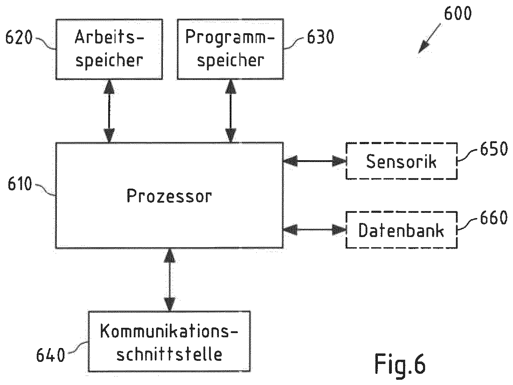

In einem ersten Schritt 201 erfolgt ein Erfassen von einer Strominformation. Der Schritt 201 umfasst ein Erfassen von dem Parameter i) (Schritt 201-i), der von der Strominformation repräsentiert ist, wobei ein maximal zulässiger Abgangsstrom erfasst wird. Der Schritt 201 umfasst ein Erfassen von dem Parameter ii) (Schritt 201-ii), der von der Strominformation repräsentiert ist, wobei eine Anzahl von einem oder mehreren dezentralen Ladepunkten erfasst wird. Der Schritt 201 umfasst ein Erfassen von dem Parameter iii) (Schritt 201-iii), der von der Strominformation repräsentiert ist, wobei vorliegend ein Zeitperioden-Strommittelwert als 15-Min-Strommittelwert erfasst wird. Der Schritt 201 wird beispielsweise von dem Load-Manager 110, 510 durchgeführt, wobei der Load-Manager 110, 510 beispielsweise Sensorik (z. B. Sensorik 650 nach Fig. 6) umfasst oder aufweist. Das Erfassen der Strominformation in dem Schritt 201 erfolgt an dem Netzabgang 140 nach Fig. 1, bzw. 540 nach Fig. 5. Die Schritte 201-i) bis 201iii) können beispielsweise parallel ausgeführt werden. Alternativ können die Schritte 201-i) bis 201iii) sequentiell ausgeführt werden. Alternativ können die Schritte 201-i) bis 201iii) zum Teil sequentiell und zum anderen Teil parallel ausgeführt werden.

In einem zweiten Schritt 202 erfolgt ein Bestimmen einer Leistungsinformation, die von dem einen oder den mehreren dezentralen Ladepunkten (z. B. Ladepunkte 130 nach Fig. 1 bzw. 530 nach Fig. 5) beziehbar ist. Die Leistungsinformation kann beispielsweise durch ein Anmelden der dezentralen Ladepunkten 130, 530 an dem Load-Manager von diesem übermittelt werden. Alternativ oder zusätzlich wird die Leistungsinformation zumindest teilweise basierend auf der Strominformation bestimmt. Der Schritt 202 wird beispielsweise seitens des Load-Managers 110, 510 ausgeführt und/oder gesteuert.

In einem dritten Schritt 203 erfolgt ein Bestimmen von einem oder mehreren Steuersignalen. Der Schritt 203 wird beispielsweise seitens des Load-Managers 110, 510 ausgeführt und/oder gesteuert. Die bestimmten Steuersignale werden anschließend in einem vierten Schritt 204 ausgegeben bzw. deren Ausgabe wird veranlasst. Für den Fall, dass der Schritt 202 und/oder der Schritt 203 seitens des Load-Managers 110, 510 ausgeführt und/oder gesteuert wurden, werden die bestimmten Steuersignale an die dezentralen Ladepunkte 130 nach Fig. 1 und/oder 530 nach Fig. 5 von dem Load-Manager 110, 510 übermittelt, z. B. über eine PLC-Kommunikationsverbindung über die Stichleitung 180 nach Fig. 1 und/oder die Stichleitung 580 nach Fig. 5.

Für den Fall, dass das Flussdiagramm 200 (bzw. das Verfahren nach dem ersten Aspekt der Erfindung) von mehr als einer Vorrichtung ausgeführt und/oder gesteuert wird, können die Schritte 202, 203, 204, oder eine Kombination hiervon, z. B. von einem Server durchgeführt werden. Hierzu werden beispielsweise vor dem Durchführen der entsprechenden Schritte 202, 203, 204, oder einer Kombination hiervon die in dem Schritt 201 erfasste Strominformation an den Server übermittelt, z. B. über ein Kommunikationsnetz.

Fig. 3 stellt ein Flussdiagramm 300 einer beispielhaften Ausführungsform eines Verfahrens dar, das von einem Load-Manager 110, 510 (z. B. der Fig. 1 und/oder der Fig. 5) im Kontext der vorliegenden Erfindung ferner ausgeführt und/oder gesteuert werden kann.

In einem ersten Schritt 301 erfolgt ein Überwachen des Netzabgangs in vordefinierten oder nach vordefinierten Regeln bestimmten Zeitintervallen, wobei das Überwachen zumindest ein weiteres Erfassen von der Strominformation umfasst. Der Schritt 301 wird beispielsweise seitens des Load-Managers 110, 510 ausgeführt und/oder gesteuert.

In einem zweiten Schritt 302 erfolgt ein Adaptieren des einen oder der mehreren Steuersignale zumindest teilweise basierend auf der weiteren erfassten Strominformation, wobei das eine oder die mehreren adaptierten Steuersignale ausgegeben bzw. deren Ausgabe veranlasst wird. Der Schritt 302 wird beispielsweise seitens des Load-Managers 110, 510 ausgeführt und/oder gesteuert. Die bestimmten Steuersignale werden anschließend in einem vierten Schritt 303 ausgegeben bzw. deren Ausgabe wird veranlasst (analog zu dem Schritt 204 des Flussdiagramms 200 nach Fig. 1).

Das Flussdiagramm 300 kann zusätzlich zu dem Flussdiagramm 200 nach Fig. 2, z. B. von dem Load-Manager 110, 510 ausgeführt und/oder gesteuert werden. Beispielsweise kann das Flussdiagramm 300 wiederholt ausgeführt und/oder gesteuert werden, so dass eine Steuerung und/oder Regelung von dezentralen Ladepunkten z. B. dynamisch in Abhängigkeit von der momentanen, d.h. aktuell erfassten Strominformation gesteuert und/oder geregelt wird.

Fig. 4 stellt ein Flussdiagramm 400 einer beispielhaften Ausführungsform eines Verfahrens dar, das von einem Load-Manager 110, 510 (z. B. der Fig. 1 und/oder der Fig. 5) im Kontext der vorliegenden Erfindung ferner ausgeführt und/oder gesteuert werden kann.

In einem ersten Schritt 401 erfolgt ein Detektieren von einem oder mehreren dezentralen Ladepunkten, wobei sämtliche von dem Niederspannungsnetz umfassten dezentralen Ladepunkte ermittelt werden können. Der Schritt 401 wird beispielsweise seitens des Load-Managers 110, 510 ausgeführt und/oder gesteuert.

In einem zweiten Schritt 402 erfolgt ein Speichern des einen oder der mehreren detektierten Ladepunkte, z. B. in einer Datenbank (z. B. Datenbank 120 nach Fig. 1). Der Schritt 402 wird beispielsweise seitens des Load-Managers 110, 510 ausgeführt und/oder gesteuert.

Das Flussdiagramm 400 kann zusätzlich zu dem Flussdiagramm 200 nach Fig. 2, und optional auch zusätzlich zu dem Flussdiagramm 300 nach Fig. 3, z. B. von dem Load-Manager 110, 510 nach Fig. 1 und/oder Fig. 5 ausgeführt und/oder gesteuert werden. Beispielsweise kann das Flussdiagramm 400 wiederholt ausgeführt und/oder gesteuert werden, so dass eine Steuerung und/oder Regelung von dezentralen Ladepunkten z. B. dynamisch in Abhängigkeit von der momentanen, d.h. aktuell erfassten Anzahl von einem oder mehreren dezentralen Ladepunkten, die hinter dem Netzabgang 140 nach Fig. 1 bzw. 540 nach Fig. 5 angeordnet und von dem entsprechenden Niederspannungsnetz umfasst bzw. mit diesem operativ (z. B. elektrisch) verbunden sind.

Fig. 5 zeigt eine schematische Darstellung einer Funktionsskizze einer beispielhaften Ausführungsform der Erfindung. Der grundsätzliche Aufbau des Systems 500 entspricht dem des Systems 100 nach Fig. 1. In dem Block 510 sind drei verschiedene Schritte, die mit römisch I. bis III. bezeichnet sind, illustriert, und die im Folgenden näher erläutert sind:
I. Der Load-Manager 510 ist jeweils einmal pro Niederspannungsnetzabgang 540 eingesetzt. Dezentrale Ladepunkte 530-1 und 530-n weisen z.B. einen PLC-Empfänger auf, so dass eine aktuelle Leistungsstufe (vgl. Block 510: Stufen 0 bis 5) vom Load-Manager 510 der Netzstation empfangen wird und die Ladeleistung der dezentralen Ladepunkte 530-1 und 530-n entsprechend gesteuert und/oder geregelt (z. B. reduziert) wird.
   Optional können die dezentralen Ladepunkte 530-1 und 530-n zusätzlich einen PLC-Sender aufweisen und der Load-Manager 510 einen korrespondierenden PLC-Empfänger, z. B. zur Übermittlung der aktuellen Ladeleistung der dezentralen Ladepunkte 530-1 und 530-n und optional einer grundsätzlichen "Anmeldung" der dezentralen Ladepunkte 530-1 und 530-n am Load-Manager 510 aufweisen. Ausgehend von einem einstellbaren Grenzwert des Abgangsstromes (z.B. I_{G} = 250A) wird der aktuelle Stromwert (I_{L1}, I_{L2}, und I_{L3}) jeder Phase des Netzabganges 540 gerichtet als Mittelwert erfasst. Dabei wird der höchste Strommittelwert (lastgetrieben -> kein Rückspeisungsstrom) der jeweiligen Phase (I_{Lmax}) genutzt.
II. Es erfolgt ein Reduzieren von I_{Lmax} eines Netzabganges um die Summe der aktuell bezogenen Ladeleistungsströme (Σ I_{LP1} + I_{LP2} + ....I_{LPn} ). Wenn diese Werte dem Load-Manager 510 nicht per PLC-Kommunikation mit den dezentralen Ladepunkten 530-1 und 530-n vorliegen, können diese z. B. über einen Prognosealgorithmus in Abhängigkeit der vorangegangenen Auslastungsstufe und der Anzahl der dezentralen Ladepunkte 530-1 und 530-n vom Load-Manager 510 bestimmt (z. B. berechnet) werden. Der reduzierte Stromwert (I_{R}) wird vom Abgangsgrenzstrom (I_{G}) abgezogen. Der hierüber berechnete Stromwert (I_{Z}) wird für das Bestimmen (z. B. Berechnung) der neuen Auslastungsstufe (eine der Stufen 0 bis 5) des folgenden Zeitintervalls (t+1) herangezogen.
III. In Abhängigkeit der Abgangsauslastung in Bezug auf den Maximalwert werden Auslastungsstufen (eine der Stufen 0 bis 5) definiert, die sich an die BDEW-Ampelphasen anlehnen können, z.B. wie folgt:

**Tabelle: Leistungsstufen 0 bis 5, die von der bestimmten Leistungsinformation des Verfahrens nach dem ersten Aspekt der Erfindung repräsentiert sein können, wobei zumindest eine der Leistungsstufen zumindest einem, oder alternativ mehreren (z. B. allen) dezentralen Ladepunkten des Niederspannungsnetzes bzw. des Netzabgangs zugeordnet sein können. Das eine oder die mehreren Steuersignale können entsprechend zumindest einen, oder alternativ mehrere (z. B. alle) dezentrale Ladepunkte des Niederspannungsnetzes bzw. des Netzabgangs entsprechend steuern und/oder regeln, so dass der gemäß der Leistungsstufe vorgesehene prozentuale Wert, der einem Prozentsatz der maximalen Ladeleistung je dezentralem Ladepunkt (im Falle von Fig. 1: 530-1 bis 530-n) entspricht, freigegeben werden kann bzw. freigebbar ist.**

| | |
|---|---|
| < 0A bis 150A | Stufe 5 -> 100% |
| 151A bis 170A | Stufe 4 -> 80% |
| 171A bis 190A | Stufe 3 -> 60% |
| 191A bis 210A | Stufe 2 -> 40% |
| 211A bis 230A | Stufe 1 -> 20% |
| 231A bis >250A | Stufe 0 -> 0% |

Fig. 6 zeigt eine schematische Darstellung einer beispielhaften Ausführungsform einer Vorrichtung 600 (z. B. Load-Manager 110 nach Fig. 1, oder Load-Manager 510 nach Fig. 5) gemäß der vorliegenden Erfindung, die im Kontext der vorliegenden Erfindung eingesetzt werden kann.

Die Vorrichtung 600 kann beispielsweise die Vorrichtung 110 nach Fig. 1 repräsentieren, und dann beispielsweise das Verfahren des Flussdiagramms 200 der Fig. 2 ausführen. Die Vorrichtung 600 kann ferner beispielsweise die Vorrichtung 110 nach Fig. 1 repräsentieren, und dann beispielsweise zusätzlich das Verfahren des Flussdiagramms 300 der Fig. 3, und/oder das Verfahren des Flussdiagramms 400 der Fig. 4 ausführen.

Vorrichtung 600 umfasst einen Prozessor 610 mit zugeordnetem Arbeitsspeicher 620 und Programmspeicher 630. Der Prozessor 610 führt beispielsweise Programmanweisungen aus, die im Programmspeicher 630 gespeichert sind. Die Programmanweisungen führen das Verfahren gemäß dem ersten Aspekt der Erfindung aus und/oder steuern dieses. Damit enthält der Programmspeicher 630 ein Computerprogramm nach einem beispielhaften Aspekt der Erfindung und stellt ein Computerprogrammprodukt zu dessen Speicherung dar. Vorrichtung 600 stellt ein Beispiel einer Vorrichtung gemäß dem zweiten Aspekt der Erfindung dar.

Der Programmspeicher 630 kann beispielsweise ein persistenter Speicher, wie beispielsweise ein Read-Only-Memory (ROM)-Speicher sein. Der Programmspeicher kann beispielsweise fest mit dem Prozessor 610 verbunden sein, kann aber alternativ auch lösbar mit dem Prozessor 610 verbunden sein, beispielsweise als Speicherkarte, Diskette oder optisches Datenträgermedium (z. B. eine CD, DVD, oder Blu-Ray). In dem Programmspeicher 630, oder in einem separaten Speicher, können auch weitere Informationen abgespeichert sein.

Der Arbeitsspeicher 620 wird beispielsweise zur Speicherung temporärer Ergebnisse während der Abarbeitung der Programmanweisungen genutzt. Es handelt sich hierbei beispielsweise um einen flüchtigen Speicher, wie beispielsweise einen Random-Access-Memory (RAM)-Speicher.

Der Prozessor 610 ist ferner beispielsweise mit einer Kommunikationsschnittstelle 640 verbunden, mit der beispielsweise ein Informationsaustausch mit anderen Vorrichtungen möglich ist (siehe die Pfeile in Fig. 1 und/oder Fig. 5).

Die Vorrichtung 600 kann auch weitere Komponenten enthalten, z. B. Sensorik 650 insbesondere zum Erfassen der Strominformation, und/oder optional eine Datenbank 660 insbesondere zum Speichern von einer oder mehreren Leistungsinformationen, Steuersignalen, Look-Up Tabellen, oder einer Kombination hiervon, um nur einige nicht-limitierende Beispiele zu nennen. Falls Vorrichtung 600 die Vorrichtung 110 nach Fig. 1 repräsentiert, ist beispielsweise ein Erfassungsmittel zum Erfassen von der Strominformation vorhanden. Ferner sind diese Komponenten 650, 660 beispielsweise mit dem Prozessor 610 operativ verbunden.

Falls Vorrichtung 600 die Vorrichtung 110 nach Fig. 1 repräsentiert, ist beispielsweise ferner ein Bestimmungsmittel zum Bestimmen von der Leistungsinformation und zum Bestimmen von dem einen oder den mehreren Steuersignalen, um nur einige nicht-limitierende Beispiele zu nennen, vorhanden, wobei das Bestimmungsmittel beispielsweise als strukturelle und/oder funktionelle Einheit eingerichtet ist und beispielsweise von dem Prozessor 610 umfasst ist oder mit diesem operativ verbunden ist.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekte offenbart verstanden werden.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren, durchgeführt von zumindest einer Vorrichtung, umfassend:
- Erfassen von einer Strominformation indikativ für:
i) einen maximal zulässigen Abgangsstrom;
ii) eine Anzahl von mehreren dezentralen Ladepunkten; und
iii) einen Zeitperioden-Strommittelwert;
wobei das Erfassen der Strominformation an einem Netzabgang eines Niederspannungsnetzes erfolgt und wobei die mehreren dezentralen Ladepunkte von dem Niederspannungsnetzabgang versorgt werden;
- Bestimmen einer Leistungsinformation indikativ für eine maximal mögliche Ladeleistung, die von den mehreren dezentralen Ladepunkten beziehbar ist;
- Bestimmen von einem oder mehreren Steuersignalen indikativ für eine Steuerung und/oder Regelung der mehreren dezentralen Ladepunkte, wobei das eine oder die mehreren Steuersignale zumindest teilweise basierend auf der Strominformation und/oder der Leistungsinformation bestimmt werden;
- Ausgeben oder Veranlassen des Ausgebens des einen oder der mehreren Steuersignale, wobei die mehreren dezentralen Ladepunkte untereinander kommunizieren, wobei das Ausgeben oder das Veranlassen des Ausgebens der Steuersignale mittels einer Übertragung des einen oder der mehreren Steuersignale über eine Kommunikationsverbindung zu zumindest einem der mehreren Ladepunkte erfolgt, und wobei die Kommunikationsverbindung eine Powerline-Kommunikationsverbindung ist;
- Detektieren von mehreren dezentralen Ladepunkten im Rahmen einer Broadcast-Discovery-Funktion, wobei sämtliche von dem Niederspannungsnetz umfasste dezentrale Ladepunkte ermittelt werden; und
- Speichern der mehreren detektierten dezentralen Ladepunkte;
- wobei das eine oder die mehreren Steuersignale für die mehreren dezentralen Ladepunkte eine Leistungsstufe repräsentieren, wobei die Leistungsstufe indikativ für eine maximale Ladeleistung je dezentralem Ladepunkt ist.

2. Verfahren nach Anspruch 1, wobei das eine oder die mehreren Steuersignale ferner basierend auf einer Abgangsauslastungsinformation bestimmt werden, wobei die Abgangsauslastungsinformation indikativ für eine Abgangsauslastung des Netzabgangs in Bezug auf eine maximal mögliche Abgangsauslastung ist.

3. Verfahren nach einem der vorhergehenden Ansprüche, ferner umfassend:
- Überwachen des Netzabgangs in vordefinierten oder nach vordefinierten Regeln bestimmten Zeitintervallen, wobei das Überwachen zumindest ein weiteres Erfassen von der Strominformation umfasst; und
- Adaptieren des einen oder der mehreren Steuersignale zumindest teilweise basierend auf der weiteren erfassten Strominformation, wobei das eine oder die mehreren adaptierten Steuersignale ausgegeben bzw. deren Ausgabe veranlasst wird.

4. Verfahren nach einem der vorhergehenden Ansprüche, wobei an den mehreren dezentralen Ladepunkten jeweils operativ verbundene Lasten gemeinsam mittels einer Leistungsmodulation gespeist werden.

5. Verfahren nach einem der vorhergehenden Ansprüche, wobei über eine weitere Kommunikationsverbindung zu einer Netzleitstelle eines dem Niederspannungsnetz übergeordneten Stromnetzes eine Kommunikation erfolgen kann.

6. Verfahren nach einem der vorhergehenden Ansprüche, wobei das eine oder die mehreren Steuersignale ferner basierend in einer Datenbank hinterlegten Informationen bestimmt werden, wobei die in der Datenbank hinterlegten Informationen zumindest die Strominformation repräsentieren.

7. Verfahren nach einem der vorhergehenden Ansprüche, wobei die Strominformation ferner für den folgenden Parameter iv) am Netzabgang indikativ ist:
iv) Zeitperioden-Strommittelwert in Abhängigkeit der Stromrichtung.

8. Verfahren nach einem der vorhergehenden Ansprüche, wobei das Verfahren von einem Load-Manager durchgeführt wird, der an dem Netzabgang angeordnet oder mit diesem operativ verbunden ist.

9. Vorrichtung eingerichtet zur Ausführung und/oder Steuerung des Verfahrens nach einem der Ansprüche 1 bis 10 oder umfassend jeweilige Mittel zur Ausführung und/oder Steuerung der Schritte des Verfahrens nach einem der Ansprüche 1 bis 8.

10. System, umfassend eine oder mehrere Vorrichtungen, die eingerichtet sind zur Ausführung und/oder Steuerung des Verfahrens nach einem der Ansprüche 1 bis 8 oder Mittel zur Ausführung und/oder Steuerung der Schritte des Verfahrens nach einem der Ansprüche 1 bis 8 aufweisen.

11. Computerprogramm, umfassend Programmanweisungen, die einen Prozessor zur Ausführung und/oder Steuerung des Verfahrens gemäß einem der Ansprüche 1 bis 8 veranlassen, wenn das Computerprogramm auf dem Prozessor läuft.

## Claims

1. A method carried out by at least one device, comprising:
- detecting a piece of current information indicative of:
i) a maximum permissible output current;
ii) a number of multiple decentralised charging points; and
iii) a time-period current mean value;
wherein the detecting of the piece of current information is performed at a feed-in point of a low-voltage grid and wherein the multiple decentralised charging points are supplied by the low-voltage grid feed-in point;
- determining a piece of power information indicative of a maximum possible charging power that is drabable by the multiple decentralised charging points;
- determining one or more control signals indicative of a control and/or regulation of the multiple decentralised charging points, wherein the one or more control signals are determined at least in part based on the piece of current information and/or the piece of power information;
- outputting or causing the outputting of the one or more control signals, wherein the multiple decentralised charging points communicate with one another, wherein the outputting or causing the outputpting of the control signals is performed by transmitting the one or more control signals via a communication link to at least one of the multiple charging points, and wherein the communication link is a powerline communication link;
- detecting of multiple decentralised charging points as part of a broadcast discovery function, wherein all decentralised charging points comprised within the low-voltage grid are identified; and
- storing the multiple detected decentralised charging points;
- wherein the one or more control signals for the multiple decentralised charging points represent a power level, wherein the power level is indicative of a maximum charging power per decentralised charging point.

2. The method according to claim 1, wherein the one or more control signals are further determined based on a piece of grid feed-in point load information, wherein the piece of grid feed-in point load information is indicative of a feeder load of the grid feed-in point relative to a maximum grid feed-in point load.

3. The method according to one of the preceding claims, further comprising:
- monitoring the grid feed-in point at time intervals that are predefined or determined according to predefined rules, wherein the monitoring comprises at least one further detecting of the piece of current information; and
- adapting the one or more control signals at least partly based on the further detected piece of current information, wherein the one or more adapted control signals are output and their outputting is caused, respectively.

4. The method according to one of the preceding claims, wherein loads operatively connected to each of the multiple decentralised charging points are jointly supplied by means of power modulation.

5. The method according to one of the preceding claims, wherein a communication can take place via a further communication link to a grid control centre of a power grid superordinate to the low-voltage grid.

6. The method according to one of the preceding claims, wherein the one or more control signals are further determined on the basis of a piece of information stored in a database, wherein the piece of information stored in the database represents at least the piece of current information.

7. The method according to one of the preceding claims, wherein the piece of current information is further indicative of the following parameter iv) at the grid feed-in point:
iv) time-period current mean value as a function of the current direction.

8. The method according to one of the preceding claims, wherein the method is performed by a load manager arranged at or operatively connected to the grid feed-in point.

9. An apparatus configured to perform and/or control the method according to any one of claims 1 to 8, or comprising respective means for performing and/or controlling the steps of the method according to any one of claims 1 to 8.

10. A system comprising one or more devices configured to perform and/or control the method according to any one of claims 1 to 8, or comprising means for performing and/or controlling the steps of the method according to any one of claims 1 to 8.

11. A computer program comprising program instructions that cause a processor to execute and/or control the method according to any one of claims 1 to 8 when the computer program is running on the processor.

## Revendications

1. Méthode, effectuée par au moins un dispositif, comprenant :
- acquérir une information de courant indicative de :
i) un courant de départ maximum admissible ;
ii) un nombre de plusieurs points de charge décentralisés ; et
iii) une valeur moyenne de courant sur période temporelle ;
où l'acquisition de l'information de courant est effectuée à un départ de réseau d'un réseau basse tension et où les plusieurs points de charge décentralisés sont alimentés par le départ de réseau basse tension ;
- déterminer une information de puissance indicative d'une puissance de charge maximale possible, obtenable à partir des plusieurs points de charge décentralisés ;
- déterminer un ou plusieurs signaux de commande indicatifs d'une commande et/ou d'une régulation des plusieurs points de charge décentralisés, où le ou les plusieurs signaux de commande sont déterminés au moins en partie basé sur l'information de courant et/ou l'information de puissance ;
- émettre ou provoquer l'émission du ou des plusieurs signaux de commande, où les plusieurs points de charge décentralisés communiquent entre eux, où l'émission ou le fait de provoquer l'émission des signaux de commande est effectuée par une transmission du ou des plusieurs signaux de commande via une liaison de communication à au moins un des plusieurs points de charge, et où la liaison de communication est une liaison de communication par courant porteur ;
- détecter plusieurs points de charge décentralisés dans le cadre d'une fonction de découverte par diffusion, où tous les points de charge décentralisés compris par le réseau basse tension sont identifiés ; et
- stocker les plusieurs points de charge décentralisés détectés ;
- où le ou les plusieurs signaux de commande représentent un niveau de puissance pour les plusieurs points de charge décentralisés, où le niveau de puissance est indicatif d'une puissance de charge maximale par point de charge décentralisé.

2. Méthode selon la revendication 1, où le ou les plusieurs signaux de commande sont en outre déterminés basé sur une information d'utilisation de départ, où l'information d'utilisation de départ est indicative d'une utilisation du départ de réseau par rapport à une utilisation de départ maximale possible.

3. Méthode selon l'une des revendications précédentes, comprenant en outre :
- surveiller le départ de réseau à des intervalles de temps prédéfinis ou déterminés selon des règles prédéfinies, où la surveillance comprend au moins une autre acquisition de l'information de courant ; et
- adapter le ou les plusieurs signaux de commande au moins en partie basé sur l'information de courant acquise en outre, où le ou les plusieurs signaux de commande adaptés sont émis ou leur émission est provoquée.

4. Méthode selon l'une des revendications précédentes, où les charges opérationnellement connectées respectives aux plusieurs points de charge décentralisés sont alimentées ensemble par une modulation de puissance.

5. Méthode selon l'une des revendications précédentes, où une communication peut avoir lieu via une autre liaison de communication à un centre de commande réseau d'un réseau électrique supérieur au réseau basse tension.

6. Méthode selon l'une des revendications précédentes, où le ou les plusieurs signaux de commande sont en outre déterminés basé sur des informations stockées dans une base de données, où les informations stockées dans la base de données représentent au moins l'information de courant.

7. Méthode selon l'une des revendications précédentes, où l'information de courant est en outre indicative du paramètre suivant iv) au départ de réseau :
iv) valeur moyenne de courant sur période temporelle en fonction du sens du courant.

8. Méthode selon l'une des revendications précédentes, où la méthode est effectuée par un gestionnaire de charge, disposé au départ de réseau ou relié de manière opérationnelle à celui-ci.

9. Dispositif configuré pour une exécution et/ou une commande de la méthode selon l'une des revendications 1 à 10 ou comprenant des moyens respectifs pour une exécution et/ou une commande des étapes de la méthode selon l'une des revendications 1 à 8.

10. Système, comprenant un ou plusieurs dispositifs, qui sont configurés pour une exécution et/ou une commande de la méthode selon l'une des revendications 1 à 8 ou qui ont des moyens pour une exécution et/ou une commande des étapes de la méthode selon l'une des revendications 1 à 8.

11. Programme informatique, comprenant des instructions de programme qui amènent un processeur à exécuter et/ou à commander la méthode selon l'une des revendications 1 à 8 lorsque le programme informatique s'exécute sur le processeur.
